# EUROPÄISCHE PATENTSCHRIFT

(11) **EP 3 484 018 B1**
(45) Veröffentlichungstag und Bekanntmachung des Hinweises auf die Patenterteilung: **12.04.2023**
(21) Anmeldenummer: 18184522.3
(22) Anmeldetag: 19.07.2018
(51) Int. Cl.: H02K 1/30, H02K 7/04, H02K 15/03

(54) **EC-MOTOR MIT VERGOSSENER ANKERWELLE**
EC MOTOR WITH A MOULDED ARMATURE SHAFT
MOTEUR EC À ARBRE D'INDUIT COUVERT COULÉ

(30) Priorität: 08.11.2017 DE 102017126143
(43) Veröffentlichungstag der Anmeldung: 15.05.2019
(73) Patentinhaber: C. & E. Fein GmbH, 73529 Schwäbisch Gmünd-Bargau (DE)
(72) Erfinder: Maier, Christoph, 73274 Notzingen (DE); Grass, Fabian, 70374 Stuttgart (DE); Burkhardt, Thomas, 73540 Heubach (DE)
(74) Vertreter: Wallinger, Michael

(56) Entgegenhaltungen:
- EP-A1- 2 955 817
- DE-A1-102010 061 778
- DE-A1-102015 110 267
- US-A1- 2006 022 541

## Beschreibung

Die Erfindung betrifft einen EC-Motor mit einem Stator, in dem ein Anker drehbar gelagert ist, wobei der Anker eine Ankerwelle aufweist, auf der ein Ankerblechpaket mit einer Mehrzahl von Permanentmagneten gehalten ist, wobei das Ankerblechpaket gegenüber der Ankerwelle mittels einer Vergussmasse elektrisch isoliert ist und wobei die Permanentmagnete in Taschen des Ankerblechpakets durch Vergussmasse gehalten sind.

Ein derartiger EC-Motor ist aus der DE 10 2010 031 399 A1 bekannt. Hierbei ist das Ankerblechpaket mittels eines Spritzpressverfahrens auf der Ankerwelle fixiert.

Auch aus der DE 10 2010 061 778 A1 ist ein EC-Motor der eingangs genannten Art bekannt. Hierbei sind die Permanentmagnete in Taschen aufgenommen, die mit einer Vergussmasse zum Beispiel Aluminium vergossen werden.

Ein weiterer EC-Motor mit Auswuchtringen ist aus der DE 10 2015 110 267 A1 bekannt.

Aus der EP 2 955 817 A1 ist wiederum ein Elektromotor bekannt, bei dem Klebstoff durch mehrere Einlässe, die in Wuchtringen ausgebildet sind, in den Motor eingeleitet werden, um die Rotorwelle mit einem Magneten zu verbinden.

EC-Motoren (bürstenlose, elektronisch kommutierte Elektromotoren) werden zum Beispiel in handgeführten oder transportablen Elektrowerkzeugen verwendet. Sie bestehen aus einem Stator mit mehreren Wicklungen und aus einem mit Permanentmagneten bestückten Anker (auch als Rotor bezeichnet). Durch eine geeignete Ansteuerung wird ein Drehfeld im Stator erzeugt, welches den Rotor antreibt. Wenn solche Motoren bei netzbetriebenen Elektrowerkzeugen eingesetzt werden sollen, ist es notwendig, eine elektrische Isolierung zwischen der Ankerwelle und dem Ankerblechpaket zu realisieren.

Dies wird bei dem EC-Motor gemäß der vorstehend genannten DE 10 2010 031 399 A1 durch das Einbringen eines geeigneten Kunststoffes im Spritzgießverfahren bewirkt. Hierbei ist die Innenkontur des Ankerblechpaketes speziell ausgeformt, um eine gute Drehmomentübertragung vom Ankerblechpaket über die Vergussmasse auf die Ankerwelle, die aus Stahl besteht, zu gewährleisten. In den im Ankerblechpaket vorgesehenen Taschen zur Aufnahme der Permanentmagnete können Freiräume vorgesehen sein, um ein Einbringen von Vergussmasse zu erlauben.

Nachteilig bei dem bekannten EC-Motor ist es, dass die Vergussmasse von der Mitte des Ankerblechpakets aufwendig mittels des Spritzgusswerkzeugs zu den Öffnungen für die Permanentmagnete gebracht werden muss.

Vor diesem Hintergrund liegt der Erfindung die Aufgabe zugrunde, einen EC-Motor mit einer verbesserten Ankerwelle zu schaffen, die auf einfache, sichere und kostengünstige Weise herstellbar ist.

Ferner soll ein geeignetes Herstellverfahren für eine einfache, kostengünstige und sichere Herstellung eines Ankers für einen EC-Motor angegeben werden.

Diese Aufgabe wird bezüglich des EC-Motors gemäß der eingangs genannten Art dadurch gelöst, dass an mindestens einem axialen Ende des Ankerblechpakets ein Wuchtring vorgesehen ist, der mit einer zentralen Ausnehmung auf der Ankerwelle aufgenommen ist, wobei ein Spalt zwischen der Ankerwelle und der zentralen Ausnehmung mit Vergussmasse gefüllt ist, und dass die zentrale Ausnehmung des Wuchtrings als Angusskanal in Form des Spaltes (32, 34) zur Durchführung von Vergussmasse (28) in einen Spalt (30) zwischen dem Ankerblechpaket (22) und der Ankerwelle (20) und in die Taschen (36) des Ankerblechpaketes (22) ausgebildet ist.

Die Aufgabe der Erfindung wird ferner durch ein Verfahren zum Herstellen eines Ankers für einen EC-Motor mit den folgenden Schritten gelöst:
- Bereitstellen einer Ankerwelle;
- Bereitstellen eines Ankerblechpakets mit Taschen zur Aufnahme von Permanentmagneten;
- Bereitstellen eines Wuchtrings an mindestens einem axialen Ende des Ankerblechpakets;
- Fixieren der Permanentmagnete in den Taschen des Ankerblechpakets;
- Anlegen des Wuchtrings an das Ende des Ankerblechpakets;
- Einsetzen der Ankerwelle, des Ankerblechpakets und des mindestens einen Wuchtrings in eine Gießform relativ zueinander zentriert, derart, dass der Wuchtring am axialen Ende des Ankerblechpakets anliegt;
- Schließen der Gießform;
- Zuführen von Vergussmasse unter Druck über einen Angusskanal in Form eines Spaltes zwischen dem Wuchtring und der Ankerwelle in einen Spalt zwischen dem Ankerblechpaket und in die Taschen mit den Permanentmagneten;
- Aushärten der Vergussmasse;
- Entnehmen des Ankers aus der Form.

Die Aufgabe der Erfindung wird auf diese Weise gelöst.

Erfindungsgemäß wird der Spalt zwischen der zentralen Ausnehmung des Wuchtrings als Angusskanal benutzt, um Vergussmasse in den Spalt zwischen der Ankerwelle und dem Ankerblechpaket und in die Taschen des Ankerblechpakets zuzuführen. Auf diese Weise ergibt sich eine einfache Zuführung der Vergussmasse. Auch wird eine gesonderte Befestigung der Permanentmagnete durch aufwendiges Verkleben überflüssig. Es ergibt sich somit eine erheblich vereinfachte und kostengünstige Herstellung. Die Wuchtringe, die ohnehin erforderlich sind, um ein Auswuchten des Ankers zu ermöglichen und die im Stand der Technik üblicherweise auf die Ankerwelle aufgepresst werden, werden nunmehr beim Gießvorgang mit der Ankerwelle verbunden.

Erfindungsgemäß ist die zentrale Ausnehmung des Wuchtrings als Angusskanal in Form eines Spaltes zur Durchführung von Vergussmasse in einen Spalt zwischen dem Ankerblechpaket und der Ankerwelle und in die Taschen des Ankerblechpakets ausgebildet.

Vorzugsweise sind an beiden Enden des Ankerblechpakets Wuchtringe mit zentralen Ausnehmungen vorgesehen, die als Angusskanäle zur Durchführung von Vergussmasse in den Spalt zwischen dem Ankerblechpaket und der Ankerwelle und in die Taschen des Ankerblechpakets ausgebildet sind.

Auf diese Weise wird die Zuführung von Vergussmasse weiter erleichtert. Außerdem wird eine gleichmäßige Verteilung der Vergussmasse von mindestens einer Seite her ermöglicht.

Gemäß der Erfindung entspricht der Außendurchmesser jedes Wuchtrings dem Außendurchmesser des Ankerblechpakets.

Auf diese Weise ist eine einfache Abdichtung im Spritzgießwerkzeug während des Einspritzens der Vergussmasse ermöglicht.

Gemäß einer weiteren Ausgestaltung der Erfindung ist jeder Wuchtring an seiner dem Ankerblechpaket zugewandten Seite durch einen ringförmigen Vorsprung in Richtung zum Ankerblechpaket abgeschlossen. Hierbei ist der ringförmige Vorsprung vorzugsweise bündig mit der Außenoberfläche des Wuchtrings ausgebildet.

Auf diese Weise kann durch den ringförmigen Vorsprung eine bessere Abdichtung gegenüber dem Ankerblechpaket während eines Spritzgießvorgangs gewährleistet werden.

Gemäß einer weiteren Ausgestaltung der Erfindung ist jeder Wuchtring an seiner zentralen Ausnehmung mit Formschlusselementen, vorzugsweise in Form von Sicken oder Rillen, versehen.

Auf diese Weise wird die Verbindung zwischen der Vergussmasse und dem Wuchtring formschlüssig gestaltet, was zur Stabilität beiträgt.

Gemäß einer weiteren Ausgestaltung der Erfindung ist jeder Permanentmagnet in seiner Tasche durch hervorstehende Nasen von Blechelementen des Ankerblechpakets festgelegt, wobei mindestens zwei, vorzugsweise vier, Blechlamellen eine Nase aufweisen.

Durch eine derartige Festlegung der Permanentmagnete in ihren Taschen kann vor dem Vergießen des Ankers eine Fixierung der Permanentmagnete in ihren zugeordneten Taschen gewährleistet werden. Dies erleichtert den Herstellvorgang.

Gemäß einer weiteren Ausgestaltung der Erfindung besteht jeder Wuchtring vorzugsweise aus einer Messinglegierung oder einem vergleichbaren nichtmagnetischen Werkstoff, während die Ankerwelle vorzugsweise aus Stahl besteht.

Dies erlaubt eine einfache Auswuchtung.

In bevorzugter Weiterbildung der Erfindung werden an den beiden axialen Enden des Ankerblechpakets Wuchtringe an das Ankerblechpaket angelegt und die Vergussmasse über Angusskanäle in Form von Spalten zwischen den Wuchtringen und der Ankerwelle von beiden Seiten zugeführt.

Dies erleichtert den Gießprozess und führt zu einer gleichmäßigeren Verteilung der Vergussmasse.

In zusätzlicher Weiterbildung der Erfindung wird jeder Wuchtring an seiner dem Ankerblechpaket zugewandten Seite durch einen ringförmigen Vorsprung gegenüber dem Ankerblechpaket abgedichtet, wobei der ringförmige Vorsprung vorzugsweise bündig mit der Außenoberfläche des Wuchtrings ausgebildet wird.

Dies erleichtert die Abdichtung des Wuchtrings gegenüber dem Ankerblechpaket beim Gießvorgang.

Gemäß einer weiteren Ausgestaltung der Erfindung wird jeder Wuchtring an seiner zentralen Ausnehmung mit Formschlusselementen, vorzugsweise in Form von Sicken oder Rillen, versehen.

Dies ermöglicht eine formschlüssige Verbindung zwischen dem Wuchtring und der Vergussmasse nach deren Aushärten.

Gemäß einer weiteren Ausgestaltung der Erfindung wird jeder Permanentmagnet in seiner Tasche durch hervorstehende Nasen von Blechlamellen des Ankerblechpakets festgelegt, bevor die Fixierung durch Vergussmasse erfolgt.

Auf diese Weise wird beim Spritzgießvorgang eine Fixierung in Radialrichtung gewährleistet.

Ferner kann gemäß einer weiteren Ausführung der Erfindung beim Spritzgießvorgang eine Sicherung der Permanentmagnete zumindest an einem Ende gegen eine Verschiebung in Axialrichtung durch Anlage an einem ringförmigen Vorsprung eines Wuchtrings gewährleistet werden.

Durch diese Maßnahmen wird die Herstellung erleichtert.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung eines bevorzugten Ausführungsbeispiels unter Bezugnahme auf die Zeichnung. Es zeigen:
- Fig. 1: eine stark vereinfachte Darstellung eines erfindungsgemäßen EC-Motors;
- Fig. 2: einen vergrößerten Längsschnitt durch die Ankerwelle des EC-Motors gemäß Fig. 1;
- Fig. 3: einen vergrößerten Ausschnitt aus dem Detail III gemäß Fig. 2;
- Fig. 4: einen vergrößerten Ausschnitt aus dem Detail IV gemäß Fig. 2;
- Fig. 5: einen Querschnitt durch den Anker längs der Linie IV-IV gemäß Fig. 2 und;
- Fig. 6: eine Aufsicht auf eine Formhälfte einer Gießform, in welcher der Anker mit seiner Motorwelle, dem Ankerblechpaket und den beiden Wuchtringen eingelegt ist, vor der Zuführung der Vergussmasse, wobei die Motorwelle, das Ankerblechpaket und die Wuchtringe geschnitten dargestellt sind.

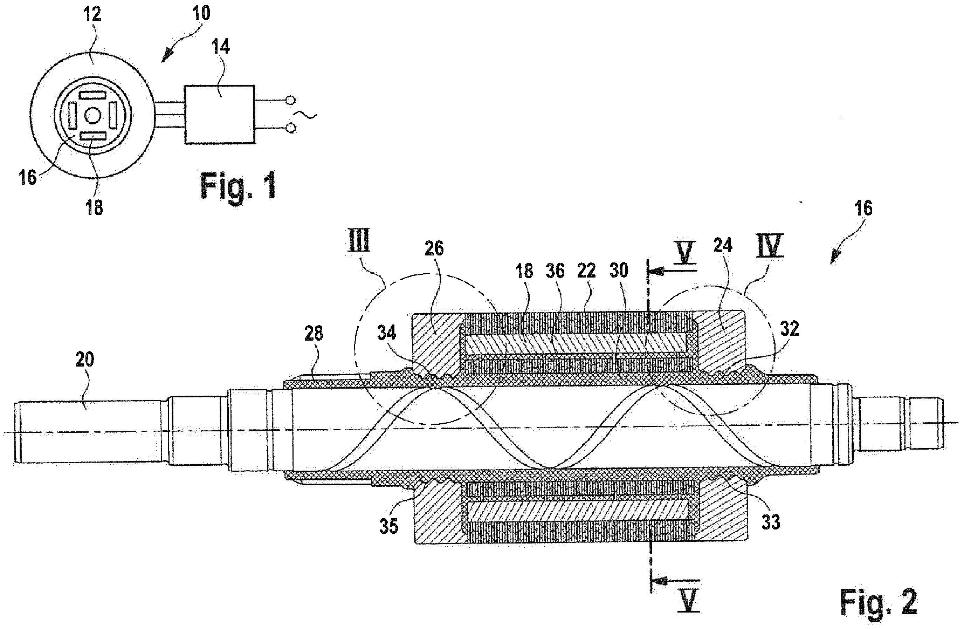

In Fig. 1 ist ein erfindungsgemäßer EC-Motor vereinfacht dargestellt.

Der Motor 10 weist einen Stator 12 mit einer Mehrzahl von Statorwicklungen (nicht dargestellt) auf. Innerhalb des Stators 12 ist ein Anker 16 drehbar gelagert, der eine Mehrzahl von Permanentmagneten 18 aufweist. Der Stator 12 wird mittels einer Ansteuerung 14 mit einem Drehfeld angesteuert, durch welches die Drehung des Ankers 16 erzeugt wird.

Fig. 2 zeigt einen vergrößerten Längsschnitt durch einen erfindungsgemäßen Anker 16 gemäß Fig. 1.

Der Anker 16 weist eine Motorwelle 20 auf, welche aus Werkzeugstahl gedreht ist. Auf der Ankerwelle 20 ist ein Ankerblechpaket 22 aufgenommen, in dem vier Permanentmagnete 18 in gleichmäßigen Winkelabständen zueinander tangential aufgenommen sind. Die Permanentmagnete 18 sind in Taschen 36 des Ankerblechpakets 22 gehalten und mittels Vergussmasse 28 fixiert.

An beiden axialen Enden des Ankerblechpakets 22 ist je ein Wuchtring 24, 26, der aus Messing oder einem vergleichbaren nichtmagnetischen Werkstoff besteht, vorgesehen. Zwischen den Wuchtringen 24, 26 und der Außenoberfläche der Motorwelle sind Spalte 32, 34 vorgesehen, die mit Vergussmasse 28 ausgefüllt sind. Die Vergussmasse 28 erstreckt sich durchgehend auch in einen Spalt 30 zwischen dem Ankerblechpaket 22 und der Außenoberfläche der Motorwelle 20, sowie bis in die Taschen 36, in denen die Permanentmagnete 18 aufgenommen sind. Die Spalte 32, 34 zwischen den Wuchtringen 24, 26 dienen während eines Spritzgießvorgangs zur Zuführung von Vergussmasse 28 in den Spalt 30 zwischen Ankerblechpaket 22 und Ankerwelle 20 sowie in die Taschen 36, in denen die Permanentmagnete 18 aufgenommen sind.

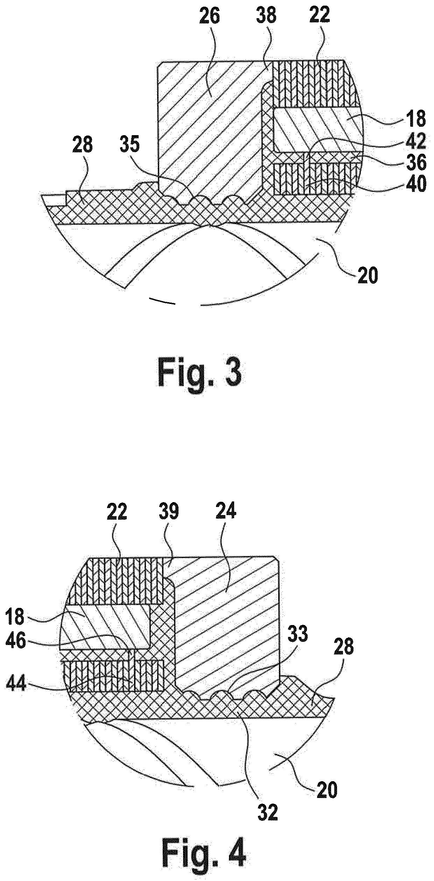

Die Wuchtringe 24, 26 sind zur späteren Auswuchtung des Ankers 16 nach dem Vergießen des Ankers 16 vorgesehen. Wie aus den Fig. 3 und 4 näher ersichtlich, sind die Wuchtringe 24, 26 an ihren zentralen Ausnehmungen mit Formschlusselementen 33, 35 versehen, die etwa als Sicken ausgestaltet sind, so dass sich nach dem Aushärten der Vergussmasse eine formschlüssige Verbindung mit der Vergussmasse 28 ergibt.

An jedem Wuchtring 24, 26 ist in Richtung zum Ankerblechpaket 22 hin ein ringförmiger Vorsprung 38, 39 angeformt. Dabei ist die Außenoberfläche der Wuchtringe 24, 26 und des ringförmigen Vorsprungs 38, 39 bündig mit der Außenoberfläche des Ankerblechpakets 22 ausgebildet. Die ringförmigen Vorsprünge 38, 39 dienen beim Spritzgießvorgang zur Abdichtung der Wuchtringe 24, 26 gegenüber dem Ankerblechpaket 22.

Um vor dem Spritzgießvorgang eine Fixierung der Permanentmagnete 18 innerhalb der Taschen 36 zu ermöglichen, sind am Ankerblechpaket 22 mehrere Blechlamellen 40, 44 mit je einer Nase 42 bzw. 46 ausgebildet, die in die Taschen 36 hinein vorstehen. Durch die Nasen 42, 44 können die Permanentmagnete 18 vor dem Spritzgießvorgang in den Taschen 36 fixiert werden.

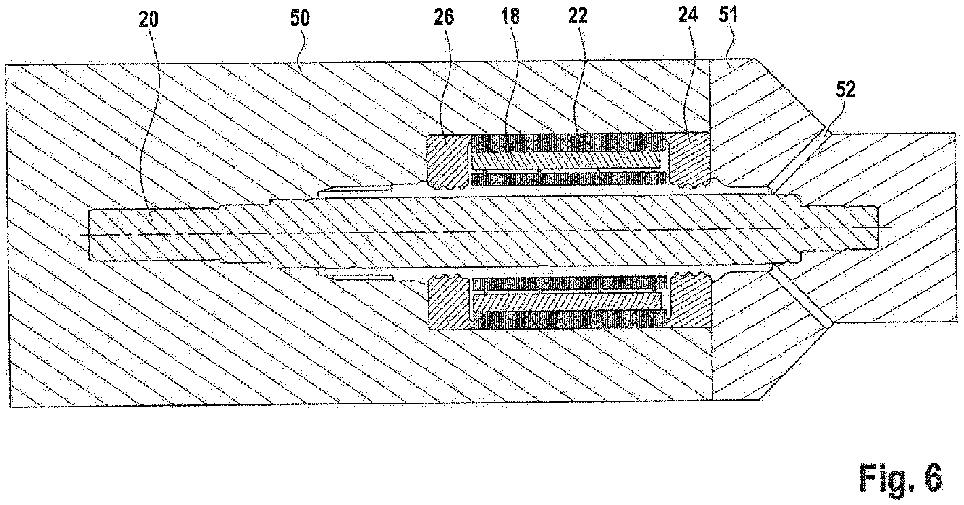

Fig. 6 zeigt einen Schnitt durch eine Spritzgießform 50, 51, in welche die Ankerwelle 20 zusammen mit dem Ankerblechpaket 22 und den beiden Wuchtringen 24, 26 eingelegt wird. Die Motorwelle 20, die Wuchtringe 24, 26 und das Ankerblechpaket 22 sind in der Form 50, 51 durch entsprechend geformte Ausnehmungen zueinander zentriert. Vor dem Spritzgießvorgang wird die zweite Formhälfte 51 aufgepresst und dann Vergussmasse über einen oder mehrere geeignete Angusskanäle 52 durch die Form 51 bis in den Hohlraum zugeführt, der zwischen der Gießform 50, 51, der Außenoberfläche der Motorwelle 20, den Wuchtringen 24, 26 und dem Ankerblechpaket 22 gebildet ist.

Die Vergussmasse 28 verteilt sich unter Druck in die entsprechenden Hohlräume, so dass sich nach dem Aushärten der Vergussmasse 28 ein vergossener Anker 16 gemäß Fig. 2 ergibt.

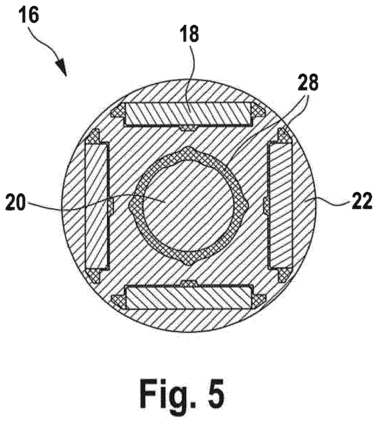

Fig. 5 zeigt einen Querschnitt durch den Anker 16 gemäß der Linie V-V gemäß Fig. 2.

Es ist erkennbar, dass sowohl das Ankerblechpaket 22 als auch die Ankerwelle 20 mit zugeordneten Formschlusselementen versehen sind, um nach dem Aushärten der Vergussmasse 28 eine formschlüssige Verbindung und damit eine sichere Drehmomentübertragung zu gewährleisten.

Eine Sicherung der Permanentmagnete 18 gegen eine axiale Verschiebung während des Spritzgießvorgangs erfolgt durch eine Anlage am ringförmigen Vorsprung 38 des Wuchtrings 26. Die Anlage am ringförmigen Vorsprung 38 erfolgt im Randbereich (vgl. Fig. 5) der Permanentmagnete 18 (in Fig. 3 und 6 wegen des Schnittverlaufs nicht erkennbar).

## Patentansprüche

1. EC-Motor mit einem Stator (12), in dem ein Anker (16) drehbar gelagert ist, wobei der Anker (16) eine Ankerwelle (20) aufweist, auf der ein Ankerblechpaket (22) mit einer Mehrzahl von Permanentmagneten (18) gehalten ist, wobei das Ankerblechpaket (22) gegenüber der Ankerwelle (20) mittels einer Vergussmasse (28) elektrisch isoliert ist, wobei die Permanentmagnete (18) in Taschen (36) des Ankerblechpaketes (22) durch Vergussmasse (28) gehalten sind, **dadurch gekennzeichnet, dass** an mindestens einem axialen Ende des Ankerblechpaketes (22) ein Wuchtring (24, 26) vorgesehen ist, der mit einer zentralen Ausnehmung auf der Ankerwelle (20) aufgenommen ist, wobei ein Spalt (32, 34) zwischen der Ankerwelle (20) und der zentralen Ausnehmung mit Vergussmasse (28) gefüllt ist, dass die zentrale Ausnehmung des Wuchtrings (24, 26) als Angusskanal in Form des Spaltes (32, 34) zur Durchführung von Vergussmasse (28) in einen Spalt (30) zwischen dem Ankerblechpaket (22) und der Ankerwelle (20) und in die Taschen (36) des Ankerblechpaketes (22) ausgebildet ist, und dass der Außendurchmesser jedes Wuchtrings (24, 26) dem Außendurchmesser des Ankerblechpaketes (22) entspricht.

2. EC-Motor nach Anspruch 1, **dadurch gekennzeichnet, dass** an beiden Enden des Ankerblechpaketes (22) Wuchtringe (24, 26) mit zentralen Ausnehmungen vorgesehen sind, die als Angusskanäle zur Durchführung von Vergussmasse (28) in den Spalt (30) zwischen dem Ankerblechpaket (22) und der Ankerwelle (20) und in die Taschen (36) des Ankerblechpaketes (22) ausgebildet sind.

3. EC-Motor nach einem der vorhergehenden Ansprüche, **dadurch gekennzeichnet, dass** jeder Wuchtring (24, 26) an seiner dem Ankerblechpaket (22) zugewandten Seite durch einen ringförmigen Vorsprung (38, 48) in Richtung zum Ankerblechpaket (22) abgeschlossen ist.

4. EC-Motor nach Anspruch 3, **dadurch gekennzeichnet, dass** der ringförmige Vorsprung (38, 48) bündig mit der Außenoberfläche des Wuchtrings (24, 26) ausgebildet ist.

5. EC-Motor nach einem der vorhergehenden Ansprüche, **dadurch gekennzeichnet, dass** jeder Wuchtring (24, 26) an seiner zentralen Ausnehmung mit Formschlusselementen (33, 35), vorzugsweise in Form von Sicken oder Rillen, versehen ist.

6. EC-Motor nach einem der vorhergehenden Ansprüche, **dadurch gekennzeichnet, dass** jeder Permanentmagnet (18) in seiner Tasche (36) durch hervorstehende Nasen (42, 46) von Blechlamellen (40, 44) des Ankerblechpakets (22) festgelegt ist, wobei mindestens zwei, vorzugsweise vier, Blechlamellen (40, 44) eine Nase (42, 46) aufweisen.

7. EC-Motor nach einem der Ansprüche 3 bis 6, **dadurch gekennzeichnet, dass** der ringförmige Vorsprung (38, 48) zur axialen Abstützung der Permanentmagnete (18) ausgebildet ist.

8. EC-Motor nach einem der vorhergehenden Ansprüche, **dadurch gekennzeichnet, dass** jeder Wuchtring (24, 26) aus einer Messinglegierung oder einem vergleichbaren nichtmagnetischen Werkstoff besteht, und dass die Ankerwelle (20) vorzugsweise aus Stahl besteht.

9. Verfahren zum Herstellen eines Ankers für einen EC-Motor mit den folgenden Schritten:
- Bereitstellen einer Ankerwelle (20);
- Bereitstellen eines Ankerblechpaketes (22) mit Taschen (36) zur Aufnahme von Permanentmagneten (18);
- Bereitstellen eines Wuchtrings (24, 26) an mindestens einem axialen Ende des Ankerblechpakets (22), wobei der Außendurchmesser jedes Wuchtrings (24, 26) dem Außendurchmesser des Ankerblechpaketes (22) entspricht;
- Fixieren der Permanentmagnete (18) in den Taschen (36) des Ankerblechpakets (22);
- Anlegen des Wuchtrings (24, 26) an das Ende des Ankerblechpakets (22);
- Einsetzen der Ankerwelle (20), des Ankerblechpaketes (22) und des mindestens einen Wuchtrings (24, 26) in eine Gießform (50, 51) relativ zueinander zentriert, derart, dass der Wuchtring (24, 26) am axialen Ende des Ankerblechpakets (22) anliegt;
- Schließen der Gießform (50, 51);
- Zuführen von Vergussmasse (28) unter Druck über einen Angusskanal (52) in Form eines Spaltes (32, 34) zwischen dem Wuchtring (24, 26) und der Ankerwelle (20) in einen Spalt (30) zwischen dem Ankerblechpaket (22) und in die Taschen (36) mit den Permanentmagneten (18);
- Aushärten der Vergussmasse (28);
- Entnehmen des Ankers (16) aus der Gießform (50, 51).

10. Verfahren nach Anspruch 9, bei dem an beiden axialen Enden des Ankerblechpakets (22) Wuchtringe (24, 26) an das Ankerblechpaket (22) angelegt werden und dass die Vergussmasse (28) über Angusskanäle in Form von Spalten (32, 34) zwischen den Wuchtringen (24, 26) und der Ankerwelle (20) an mindestens einer Seite zugeführt wird.

11. Verfahren nach Anspruch 10, bei dem jeder Wuchtring (24, 26) an seiner dem Ankerblechpaket (22) zugewandten Seite durch einen ringförmigen Vorsprung (38, 48) gegenüber dem Ankerblechpaket (22) abgedichtet wird.

12. Verfahren nach Anspruch 11, bei dem der ringförmige Vorsprung (38, 48) jedes Wuchtrings (24, 26) bündig mit der Außenoberfläche des Wuchtrings (24, 26) ausgebildet wird.

13. Verfahren nach einem der Ansprüche 11 oder 12, bei dem beim Spritzgießvorgang die Permanentmagnete (18) zumindest an einem Ende durch einen ringförmigen Vorsprung (38, 48) eines Wuchtrings (24, 26) gegen eine axiale Verschiebung gesichert werden.

14. Verfahren nach einem der Ansprüche 9 bis 13, bei dem jeder Wuchtring (24, 26) an seiner zentralen Ausnehmung mit Formschlusselementen (33, 35), vorzugsweise in Form von Sicken oder Rillen, versehen wird.

15. Verfahren nach einem der Ansprüche 9 bis 14, bei dem jeder Permanentmagnet (18) in seiner Tasche (36) durch hervorstehende Nasen (42, 46) von Blechlamellen (40, 44) des Ankerblechpakets (22) festgelegt wird, bevor die Fixierung durch Vergussmasse (28) erfolgt.

## Claims

1. An EC motor having a stator (12) in which an armature (16) is rotatably mounted, wherein the armature (16) comprises an armature shaft (20) on which an armature plate stack (22) having a plurality of permanent magnets (18) is held, wherein the armature plate stack (22) being electrically insulated with respect to the armature shaft (20) by means of a casting compound (28), wherein the permanent magnets (18) being held in pockets (36) of the armature plate stack (22) by means of casting compound (28), **characterized in that** a balancing ring (24, 26) is provided at at least one axial end of the armature plate stack (22) which is accommodated with a central recess on the armature shaft (20), wherein a gap (32, 34) between the armature shaft (20) and the central recess being filled with casting compound (28), **in that** the central recess of the balancing ring (24, 26) is used as a sprue channel in the form of the gap (32, 34) for the passage of casting compound (28) into a gap (30) between the armature plate stack (22) and the armature shaft (20) and into the pockets (36) of the armature plate stack (22), and **in that** the outer diameter of each balancing ring (24, 26) corresponds to the outer diameter of the armature plate stack (22).

2. The EC motor according to claim 1, **characterized in that** balancing rings (24, 26) with central recesses are provided at both ends of the armature plate stack (22), which are configured as sprue channels for the passage of casting compound (28) into the gap (30) between the armature plate stack (22) and the armature shaft (20) and into the pockets (36) of the armature plate stack (22).

3. The EC motor according to one of the preceding claims, **characterized in that** each balancing ring (24, 26) is terminated on its side facing the armature plate stack (22) by an annular projection (38, 48) in the direction of the armature plate stack (22).

4. The EC motor according to claim 3, **characterized in that** the annular projection (38, 48) is formed flush with the outer surface of the balancing ring (24, 26).

5. The EC motor according to one of the preceding claims, **characterized in that** each balancing ring (24, 26) is provided at its central recess with positive locking elements (33, 35), preferably in the form of beads or grooves.

6. The EC motor according to one of the preceding claims, **characterized in that** each permanent magnet (18) is fixed in its pocket (36) by protruding lugs (42, 46) of laminations (40, 44) of the armature laminations stack (22), wherein at least two, preferably four, laminations (40, 44) comprise a lug (42, 46).

7. The EC motor according to one of claims 3 to 6, **characterized in that** the annular projection (38, 48) is configured for axial support of the permanent magnets (18).

8. The EC motor according to one of the preceding claims, **characterized in that** each balancing ring (24, 26) consists of a brass alloy or a comparable non-magnetic material, and that the armature shaft (20) preferably consists of steel.

9. A method of manufacturing an armature for an EC motor comprising the steps of:
- providing an armature shaft (20);
- providing an armature plate stack (22) having pockets (36) for receiving permanent magnets (18);
- providing a balancing ring (24, 26) on at least one axial end of the armature plate pack (22), wherein the outer diameter of each balancing ring (24, 26) corresponds to the outer diameter of the armature plate pack (22);
- fixing the permanent magnets (18) in the pockets (36) of the armature plate pack (22);
- placing the balancing ring (24, 26) against the end of the armature plate pack (22);
- inserting the armature shaft (20), the armature plate pack (22), and the at least one balancing ring (24, 26) into a casting mold (50, 51) centered relative to each other such that the balancing ring (24, 26) abuts the axial end of the armature plate pack (22);
- closing the casting mold (50, 51);
- feeding casting compound (28) under pressure via a sprue (52) in the form of a gap (32, 34) between the balancing ring (24, 26) and the armature shaft (20) into a gap (30) between the armature plate stack (22) and into the pockets (36) with the permanent magnets (18);
- hardening of the casting compound (28);
- removing the armature (16) from the casting mold (50, 51).

10. The method according to claim 9, wherein balancing rings (24, 26) are applied to the armature plate package (22) at both axial ends of the armature plate package (22) and that the casting compound (28) is supplied via sprue channels in the form of gaps (32, 34) between the balancing rings (24, 26) and the armature shaft (20) on at least one side.

11. The method of claim 10, wherein each balancing ring (24, 26) is sealed from the armature plate assembly (22) on its side facing the armature plate assembly (22) by an annular projection (38, 48).

12. The method of claim 11, wherein the annular projection (38, 48) of each balancing ring (24, 26) is formed flush with the outer surface of the balancing ring (24, 26).

13. The method according to any one of claims 11 or 12, wherein during the injection molding process the permanent magnets (18) are secured against axial displacement at least at one end by an annular projection (38, 48) of a balancing ring (24, 26).

14. The method according to any one of claims 9 to 13, in which each balancing ring (24, 26) is provided at its central recess with positive locking elements (33, 35), preferably in the form of beads or grooves.

15. The method of any one of claims 9 to 14, wherein each permanent magnet (18) is fixed in its pocket (36) by protruding lugs (42, 46) of sheet metal laminations (40, 44) of the armature plate pack (22) before fixing by casting compound (28).

## Revendications

1. Moteur EC avec un stator (12) dans lequel un induit (16) est monté de manière à pouvoir tourner, dans lequel l'induit (16) présente un arbre d'induit (20) sur lequel un ensemble de tôles d'induit (22) est maintenu avec une multitude d'aimants permanents (18), dans lequel l'ensemble de tôles d'induit (22) est isolé électriquement par rapport à l'arbre d'induit (20) au moyen d'une masse de scellement (28), dans lequel les aimants permanents (18) sont maintenus dans des poches (36) de l'ensemble de tôles d'induit (22) par de la masse de scellement (28), **caractérisé en ce qu'**est prévu, sur moins une extrémité axiale de l'ensemble de tôles d'induit (22), un anneau d'équilibrage (24, 26) qui est reçu par un évidement central sur l'arbre d'induit (20), dans lequel un interstice (32, 34) entre l'arbre d'induit (20) et l'évidement central est rempli de masse de scellement (28), que l'évidement central de l'anneau d'équilibrage (24, 26) est réalisé en tant que canal d'enrobage sous la forme de l'interstice (32, 34) pour le passage de masse de scellement (28) dans un interstice (30) entre l'ensemble de tôles d'induit (22) et l'arbre d'induit (20) et dans les poches (36) de l'ensemble de tôles d'induit (22), et que le diamètre extérieur de chaque anneau d'équilibrage (24, 26) correspond au diamètre extérieur de l'ensemble de tôles d'induit (22).

2. Moteur EC selon la revendication 1, **caractérisé en ce que** sont prévus, sur les deux extrémités de l'ensemble de tôles d'induit (22), des anneaux d'équilibrage (24, 26) avec des évidements centraux, qui sont réalisés en tant que canaux d'injection pour le passage de masse de scellement (28) dans l'interstice (30) entre l'ensemble de tôles d'induit (22) et l'arbre d'induit (20) et dans les poches (36) de l'ensemble de tôles d'induit (22).

3. Moteur EC selon l'une quelconque des revendications précédentes, **caractérisé en ce que** chaque anneau d'équilibrage (24, 26) est fermé par une partie faisant saillie annulaire (38, 48) en direction de l'ensemble de tôles d'induit (22), sur son côté tourné vers l'ensemble de tôles d'induit (22).

4. Moteur EC selon la revendication 3, **caractérisé en ce que** la partie faisant saillie annulaire (38, 48) est réalisée en affleurement avec la surface extérieure de l'anneau d'équilibrage (24, 26).

5. Moteur EC selon l'une quelconque des revendications précédentes, **caractérisé en ce que** chaque anneau d'équilibrage (24, 26) est pourvu d'éléments à complémentarité de forme (33, 35), de préférence sous la forme de moulures ou de rainures, sur son évidement central.

6. Moteur EC selon l'une quelconque des revendications précédentes, **caractérisé en ce que** chaque aimant permanent (18) dans sa poche (36) est défini par des ergots saillants (42, 46) de lamelles en tôle (40, 44) de l'ensemble de tôles d'induit (22), dans lequel au moins deux, de préférence quatre, lamelles en tôle (40, 44) présentent un ergot (42, 46).

7. Moteur EC selon l'une quelconque des revendications 3 à 6, **caractérisé en ce que** la partie faisant saillie annulaire (38, 48) est réalisée pour soutenir axialement les aimants permanents (18).

8. Moteur EC selon l'une quelconque des revendications précédentes, **caractérisé en ce que** chaque anneau d'équilibrage (24, 26) est constitué d'un alliage de laiton ou d'un matériau non magnétique comparable, et que l'arbre d'induit (20) est constitué de préférence d'acier.

9. Procédé de fabrication d'un induit pour un moteur EC avec les étapes suivantes :
- de mise à disposition d'un arbre d'induit (20) ;
- de fourniture d'un ensemble de tôles d'induit (22) avec des poches (36) pour recevoir des aimants permanents (18) ;
- de fourniture d'un anneau d'équilibrage (24, 26) sur au moins une extrémité axiale de l'ensemble de tôles d'induit (22), dans lequel le diamètre extérieur de chaque anneau d'équilibrage (24, 26) correspond au diamètre extérieur de l'ensemble de tôles d'induit (22) ;
- de fixation des aimants permanents (18) dans les poches (36) de l'ensemble de tôles d'induit (22) ;
- de placement de l'anneau d'équilibrage (24, 26) sur l'extrémité de l'ensemble de tôles d'induit (22) ;
- d'insertion de l'arbre d'induit (20), de l'ensemble de tôles d'induit (22) et de l'au moins un anneau d'équilibrage (24, 26) dans un moule (50, 51) les uns par rapport aux autres de telle manière que l'anneau d'équilibrage (24, 26) repose sur l'extrémité axiale de l'ensemble de tôles d'induit (22) ;
- de fermeture du moule (50, 51) ;
- d'amenée de masse de scellement (28) sous pression par l'intermédiaire d'un canal d'injection (52) sous forme d'un interstice (32, 34) entre l'anneau d'équilibrage (24, 26) et l'arbre d'induit (20) dans un interstice (30) entre l'ensemble de tôles d'induit (22) et dans les poches (36) avec les aimants permanents (18) ;
- de durcissement de la masse de scellement (28) ;
- de retrait de l'induit (16) hors du moule (50, 51).

10. Procédé selon la revendication 9, où des anneaux d'équilibrage (24, 26) sont placés sur l'ensemble de tôles d'induit (22) sur les deux extrémités axiales de l'ensemble de tôles d'induit (22), et que la masse de scellement (28) est amenée par l'intermédiaire de canaux d'injection sous forme d'interstices (32, 34) entre les anneaux d'équilibrage (24, 26) et l'arbre d'induit (20) sur au moins un côté.

11. Procédé selon la revendication 10, où chaque anneau d'équilibrage (24, 26) est étanchéifié par une partie faisant saillie annulaire (38, 48) par rapport à l'ensemble de tôles d'induit (22) sur son côté tourné vers l'ensemble de tôles d'induit (22).

12. Procédé selon la revendication 11, où la partie faisant saillie annulaire (38, 48) de chaque anneau d'équilibrage (24, 26) est formée en affleurement avec la surface extérieure de l'anneau d'équilibrage (24, 26).

13. Procédé selon l'une quelconque des revendications 11 ou 12, où, lors de l'opération de moulage par injection, les aimants permanents (18) sont bloqués au moins à une extrémité par une partie faisant saillie annulaire (38, 48) d'un anneau d'équilibrage (24, 26) pour empêcher un coulissement axial.

14. Procédé selon l'une quelconque des revendications 9 à 13, où chaque anneau d'équilibrage (24, 26) est pourvu, sur son évidement central, d'éléments à complémentarité de forme (33, 35), de préférence sous forme de moulures ou de rainures.

15. Procédé selon l'une quelconque des revendications 9 à 14, où chaque aimant permanent (18) dans sa poche (36) est placé fixement par des ergots saillants (42, 46) des lamelles en tôle (40, 44) de l'ensemble de tôles d'induit (22) avant la fixation par de la masse de scellement (28).
